# EUROPEAN PATENT SPECIFICATION

(11) **EP 2 785 757 B1**
(45) Date of publication and mention of the grant of the patent: **13.04.2016**
(21) Application number: 12809304.4
(22) Date of filing: 30.11.2012
(51) Int. Cl.: C08G 18/38, C08J 9/06, C09J 5/04, C09J 175/16, C09J 5/02

(54) **ADHESIVE COMPOSITION**
HAFTZUSAMMENSETZUNG
COMPOSITION ADHÉSIVE

(30) Priority: 01.12.2011 GB 201120677
(43) Date of publication of application: 08.10.2014
(73) Proprietor: Spinnaker International Limited, Saltash, Cornwall PL12 6LF (GB)
(72) Inventor: MILLS, Stuart, Saltash Cornwall PL12 6LF (GB)
(74) Representative: Swan, Elizabeth Mary
(86) International application number: PCT/GB2012/052955
(87) International publication number: WO 2013/079952

(56) References cited:
- GB-A- 1 453 891
- US-A- 4 465 718
- US-A- 4 898 899
- US-A- 5 811 473
- US-B1- 6 596 808

## Description

### Field of the Invention

The present invention relates to anaerobic adhesive compositions. The present invention also relates to methods of using such compositions, and uses of the compositions.

### Background to the Invention

Anaerobic adhesive compositions are known, and are commercially available on a large scale. These adhesives can be cured via a range of polymerisation pathways including heat, UV light or free radical polymerisation. The fact the technology is anaerobic means the curing process occurs in the absence of oxygen.

The present invention is primarily concerned with anaerobic adhesives that are cured by free radical polymerisation. Typically such adhesives are provided as a one-part formulation which comprises monomers and a compound that is capable of generating free radicals. The free radicals needed to initiate the polymerisation can come from a number of sources, but are commonly generated by a peroxide component in the composition of the adhesive. These peroxide compounds break down naturally at room temperature to form free radicals. These free radicals react with oxygen (in preference to the monomers in the composition) to form an inert compound. Therefore, in a suitably aerobic environment the adhesive will not cure. However in an anaerobic environment the free radicals will react with the adhesive monomers starting the curing process. An increase in temperature will cause the peroxide to generate free radicals at a faster rate than normal, as will contact with active metal ions.

At the moment, anaerobic adhesives are almost exclusively used as thread retaining and sealing agents. They are well suited to this application, due to the fact that they cure in anaerobic conditions and the curing is accelerated by contact with active metal ions. However anaerobic adhesives show characteristics which would be desirable for other applications. In particular, they have a short cure time, which, with an activator, can be less than 5 minutes. Addition of an activator also allows the adhesives to cure in an aerobic environment by greatly speeding up the generation of free radicals. Anaerobic adhesives have a reduced exothermic effect during cure when compared to other 'instant' adhesives such as cyanoacrylates. In addition, once the anaerobic adhesive has cured, it is extremely resistant to thermal, chemical and mechanical attack.

However, a major disadvantage with currently available anaerobic adhesives is that they have a relatively short shelf life. This is because the free radicals that are continuously produced react with oxygen and become inert. Over time this causes the entire adhesive composition to become inert. The compositions are necessarily stored in an oxygen-permeable container, since if they were not, the free radicals would react with the monomer to cure the adhesive.

Manufacturers have tried to mitigate the short shelf life by including an excess of peroxide, or other free radical producing compounds. However, this does not solve the underlying problem, and uses an unnecessarily high level of free radical producing compounds.

There remains a need to improve the shelf life of anaerobic adhesive compositions. This would be highly beneficial and enable such adhesives to be used in a much wider range of applications.

US5811473 discloses a primer activator composition useful in cleaning and activating metallic surfaces in preparation for use with an anaerobic adhesive. The composition contains a non-combustible, non-ozone depleting, liquid polyfluoroalkane having at least one carbon-hydrogen bond, preferably a C4-10 dihydro- or trihydro-polyfluoroalkane; an alkanol which is capable of forming an azeotropic mixture with the polyfluoroalkane, preferably a C1-6 alkanol, such as n-butanol; a transition metal compound, preferably a copper compound; and optionally, an amine co-activator.

US4898899 relates to an adhesive composition which comprises a polymerizable monomer having an acryloyl or methacryloyl group, a polymerization initiator, and at least one compound selected from the group consisting of chlorophyll, metal-substituted chlorophyll, cylorophyllin salt and phthalocyanine complex unsubstituted or substituted on a benzene nucleus thereof. The adhesive composition anaerobically cures at room temperature, rapidly adheres to various materials, and has a long pot life even under a hot and humid environment.

### Summary of the Invention

According to a first aspect, the present invention provides a method of spoiling, staining or degrading an object of value in the event of a breach of security, the method comprising the steps of: providing an anaerobic adhesive composition comprising: component (a), which comprises monomers from the acrylic family, and which is stored in reservoir (i); and component (b), which comprises a compound which is capable of generating free radicals wherein the compound which is capable of generating free radicals is a peroxide, and is stored in reservoir (ii), which is oxygen-impermeable; wherein component (a) does not comprise a compound which is capable of generating free radicals and component (b) does not comprise monomers; mixing component (a) with component (b) in an anaerobic atmosphere, or in the presence of an activator, to form an adhesive; and contacting the adhesive with the object of value.

According to a second aspect, the present invention provides the use of a composition according to the first aspect of the present invention to change the appearance of an object of value in the event of a breach of security, preferably to spoil, stain or degrade the object of value.

In the present invention, the anaerobic adhesive comprises two separately stored components, component (a) comprising monomers and component (b) comprising a compound which is capable of generating free radicals. By separating the free radical generating compound from the monomers, and by storing the free radical generating compound in an oxygen-impermeable reservoir, the shelf life of the adhesive can be dramatically improved. This is due to the fact that, during storage, the free radicals that are generated are kept away from oxygen, so do not become depleted, and are kept away from the monomers, so do not initiate polymerisation. This means that the composition is stable, and theoretically can be stored indefinitely. When the adhesive is used, components (a) and (b) are mixed, thereby effecting cure of the adhesive.

The two-component nature of the composition of the present invention represents a completely different approach from previously known anaerobic adhesives, where the monomers and free radical generating compounds are stored in the same container. The provision of a much longer shelf life according to the present invention means that the adhesives can be used in applications other than as thread retaining and sealing agents.

In particular, the characteristics of anaerobic adhesives, as listed above, especially the short cure time, reduced exothermic effect, and resistance to thermal, chemical and mechanical attack, combined with the long shelf life of compositions of the present invention, makes them ideal for use in protecting currency, or other objects of high value. This is because the adhesive can be activated by combining components (a) and (b) in the event of a breach of security, and will rapidly produce an adhesive that irreversibly sticks to the object of value, or bonds different objects, such as bank notes, together. Due to its resistance to thermal, chemical and mechanical attack, the adhesive would be extremely difficult, if not impossible, to remove from the object of value without defacing it and thereby rending it worthless.

In preferred embodiments of the invention, the composition additionally comprises an indelible pigment, bleaching agent, compound that can degrade a metallic feature, and/or compound that can dissolve or erase ink. These features would help deface an object of value even more comprehensively than with adhesive alone, and provide further protection against breaches of security. In addition, the composition can comprise unique DNA or chemical markers, which can be used to trace stolen objects of value.

### Detailed Description of the Invention

The present invention relates to an anaerobic adhesive composition which includes component (a), which comprises monomers. By monomers, we mean molecules that can combine with other molecules of the same or different kinds, to form a polymer. Monomers for use in anaerobic adhesive compositions are well known. Typically a blend of monomers is used. The monomers comprise those from the acrylic family of chemicals, i.e. monomers derived from acrylic acid, CH₂=CHCO₂H, including methyl acrylate, butyl acrylate, ethyl acrylate, and 2-ethylhexyl acrylate. Preferably component (a) comprises methacrylate monomers, most preferably including hydroxypropyl methacrylate, 4-t-butylcyclohexyl methacrylate, and/or 1,3-butylenegylcol dimethacrylate.

Before use, component (a) is stored in reservoir (i). Since the monomers are typically stable and are not reactive with oxygen, there are no particular requirements for reservoir (i), and it can be made from any suitable material such as, for example, high density polyethylene (HDPE).

The composition of the present invention also includes component (b), which comprises a compound which is capable of generating free radicals. This is a peroxide. Any compound which generates free radicals and which is a peroxide can be used, preferably a hydroperoxide. In a preferred embodiment, component (b) comprises cumene hydroperoxide, most preferably in combination with cumene, which is also known as isopropylbenzene. This combination has been found to be a very effective generator of free radicals at room temperature. Without wishing to be bound to theory, it is thought that the addition of cumene could act as a solvent to provide a solvent cage for the free radicals once generated. The ratio of cumene hydroperoxide to cumene by weight can be in the range of 1.5:1 to 2.5:1, and is preferably around 2:1.

Components (a) and (b) are selected so that, upon contact in an anaerobic atmosphere, or in the presence of an activator, they react together to form an adhesive. The curing reaction is non-reversible, meaning that objects that have been bonded together can not easily be separated. The amount of component (b) needed to initiate polymerisation of component (a) is small. Therefore, in addition to the free radical generating compound, component (b) can additionally include a solvent, so that is can be mixed more easily with component (a). If a solvent is used, it should be one that does not react with the free radical generating compound. For example, the solvent could be small amounts of cumene, as described above.

The ratio of component (a) to component (b) by weight can be in the range 100:1 to 300:1, or lower if a solvent is used. The skilled person can easily determine the proportion of component (b) needed to effectively initiate polymerisation of component (a).

In the present invention, component (b) is stored in reservoir (ii), which is oxygen-impermeable. By oxygen-impermeable we mean that the material must be suitable for storing materials that are sensitive to oxygen, such as peroxides, for extended periods of time, in the order of a month to a few years, without allowing significant degradation of the material. Reservoir (ii) can be made from any suitable material, many of which are known to those skilled in the art. For example a dense plastic or a non active metal. Preferably reservoir (ii) is made from polyoxymethylene.

According to a preferred embodiment of the present invention, the composition additionally comprises an activator. Any suitable activator can be used. In one embodiment, the activator comprises metal ions, preferably copper ions. For example, the activator can comprise 2-ethylhexanoic acid, copper salt. Activators are known to persons skilled in the art, and suitable activators can easily be selected. For example, the activator can be a blend of secondary monomers and a source of active metal ions to speed up free radical generation. In general, activators work by greatly speeding up the generation of free radicals. The use of an activator is preferable, because it allows the adhesive to be used in aerobic conditions. anaerobic adhesives, and one area of particular interest is the protection of objects of value. Spoiling agents for preventing objects of value from being useful after a security breach have been used in the past. For example, when money is transported between a security vehicle and an establishment such as a bank, it can be transported in a secure container which includes a canister of compressed gas and a reservoir of ink, such that, on release of the gas, the ink is ejected from the reservoir under pressure and is delivered to the money to stain it, and make it difficult to use. EP1,499,787 gives further details of spoiling agents, and suitable delivery systems. The spoiling agent dispensing system of EP1,499,787 is incorporated herein by reference. Anaerobic adhesives have not been used in this context before, at least partly due to the short shelf life and inherent instability of traditional one-part formulations.

The present invention provides a method of spoiling, staining or degrading an object of value in the event of a breach of security, using the anaerobic adhesive composition of the invention. The method involves mixing component (a) with component (b) in an anaerobic atmosphere, or in the presence of an activator, to form an adhesive; and then contacting the adhesive with the object of value. Methods for contacting components with an object of value in the event of a breach of security are well known, and these known methods can be used with the present composition. For an example of a suitable spoiling agent dispensing system see EP1,499,787, which is incorporated herein by reference.

The objects of value have typically been bank notes, but the present invention could be used to protect other objects of value, including document such as confidential papers and bonds, or objects such as works of art, watches, coins or jewellery.

Using an anaerobic adhesive to spoil the object of value would be very effective, since they are extremely resistant to thermal, chemical and mechanical attack. To improve further the effectiveness of the composition for this application, it is preferably to add an indelible pigment, bleaching agent, compound that can degrade a metallic feature of a document of value, or compound that can dissolve or erase ink.

Accordingly, in a preferred embodiment the composition of the present invention additionally comprises an indelible pigment. Preferably the indelible pigment is a phthalocyanine, most preferably copper phthalocyanine. In a preferred embodiment, the indelible pigment is a blend of blue and green copper phthalocyanines (PB15 and PG36) along with black and red pigments.

Alternatively or in addition, the composition of the present invention could include a bleaching agent, such as hydrogen peroxide.

Alternatively or in addition, the composition of the present invention could include a compound that can degrade a metallic feature of a document of value. This could be acetone, or a similar solvent.

Alternatively or in addition, the composition of the present invention could include a compound that can dissolve or erase ink in or on a document of value. Suitable chemicals are known to a person skilled in the art.

The indelible pigment, bleaching agent, compound that can degrade a metallic feature of a document of value, or compound that can dissolve or erase ink can be combined with component (a), or combined with component (b) or provided in a separate reservoir. Preferably the spoiling compound is provided in a separate container, so that is can not react with either component (a) or (b).

Therefore, as described above, the composition of the present invention can advantageously be used to change the appearance of an object of value in the event of a breach of security, preferably to spoil, stain or degrade the object of value.

In a further preferred embodiment unique markers are included in the composition. The markers can be chemical such as a unique combination and ratio of rare elements, for example so-called "rare earth elements" which are not found in nature together or biological such as unique DNA sequences, either synthetic or naturally occurring. The marker can be incorporated into component (a), or component (b), or provided in a separate reservoir. In this way the composition can be used to trace stolen goods using technology that is known to those skilled in the art.

### Examples

The following example is one embodiment of the invention. Components (a) and (b) have the following compositions:

### Component (a)

### Monomer

Hydroxypropyl methacrylate - 37.5%
4-t-butylcyclohexyl methacrylate - 31%
1,3-butyleneglycol dimethacrylate - 7.5%
Acrylic acid - 5%

### Activator

Octanol ethoxylate - 4%
Hydroxyalkyl methacrylate - 2.5%
Trialkylammonium carboxylate - 2.5%
Methacrylate acid - 2.5%
2-ethylhexanoic acid, copper salt - 2.5%
2-ethylhexanoic acid - 2.5%

### Dye

Copper phthalocyanine - 2.5%

### Component (b)

Cumene hydroperoxide - 66.66 %
Cumene - 33.33 %
Ratio of component A to component B is 200:1.5

On combining components (a) and (b) this composition reacts irreversibly under anaerobic or aerobic conditions, due to the presence of activators, to produce an adhesive. This composition is highly suitable for use in protecting objects of value from breaches in security.

## Claims

1. A method of spoiling, staining or degrading an object of value in the event of a breach of security, the method comprising the steps of:
providing an anaerobic adhesive composition comprising:
component (a), which comprises monomers from the acrylic family, and which is stored in reservoir (i); and
component (b), which comprises a compound which is capable of generating free radicals wherein the compound which is capable of generating free radicals is a peroxide, and is stored in reservoir (ii), which is oxygen-impermeable;
wherein component (a) does not comprise a compound which is capable of generating free radicals and component (b) does not comprise monomers;
mixing component (a) with component (b) in an anaerobic atmosphere, or in the presence of an activator, to form an adhesive; and
contacting the adhesive with the object of value.

2. A method according to claim 1, wherein component (a) comprises methacrylate monomers, most preferably wherein component (a) comprises hydroxypropyl methacrylate, 4-t-butylcyclohexyl methacrylate, and/or 1,3-butylenegylcol dimethacrylate.

3. A method according to claim 1 or 2, wherein component (b) comprises a hydroperoxide, more preferably wherein component (b) comprises cumene hydroperoxide, most preferably wherein component (b) comprises cumene hydroperoxide and cumene.

4. A method according to any preceding claim, which additionally comprises an activator.

5. A method according to claim 4, wherein the activator comprises a blend of secondary monomers and a source of active metal ions, preferably wherein the activator comprises copper ions.

6. A method according to claim 4 or 5, wherein the activator is combined with component (a) or is provided in a separate reservoir.

7. A method according to any preceding claim, which additionally comprises an indelible pigment, preferably wherein the indelible pigment is a phthalocyanine, most preferably copper phthalocyanine.

8. A method according to any preceding claim, which additionally comprises a bleaching agent such as hydrogen peroxide.

9. A method according to any preceding claim, which additionally comprises a compound that can degrade a metallic feature of a document of value, preferably wherein the compound is acetone.

10. A method according to any preceding claim, which additionally comprises a compound that can dissolve or erase ink in or on a document of value.

11. A method according to any preceding claim, which additionally comprises a marker which can be used to trace stolen objects of value.

12. A method according to any of claims 8 to 11, wherein the indelible pigment, bleaching agent, compound that can degrade a metallic feature of a document of, and/or compound that can dissolve or erase ink in or on a document of value is combined with component (a), or is combined with component (b) or is provided in a separate reservoir.

13. Use of a composition, to change the appearance of an object of value in the event of a breach of security, preferably to spoil, stain or degrade the object of value, wherein the composition is an anaerobic adhesive composition comprising:
component (a), which comprises monomers from the acrylic family, and which is stored in reservoir (i); and
component (b), which comprises a compound which is capable of generating free radicals wherein the compound which is capable of generating free radicals is a peroxide, and is stored in reservoir (ii), which is oxygen-impermeable;
wherein component (a) does not comprise a compound which is capable of generating free radicals and component (b) does not comprise monomers; and
wherein upon contact in an anaerobic atmosphere, or in the presence of an activator, components (a) and (b) react to form an adhesive.

14. A method according to any of claim 1 to 12, wherein the object of value is a document, preferably wherein the object of value is a bank note.

15. A use according to claim 13, wherein the object of value is a document, preferably wherein the object of value is a bank note.

## Patentansprüche

1. Verfahren zum Unbrauchbarmachen, Einfärben oder Zerstören eines Wertgegenstands im Falle einer Sicherheitsverletzung, wobei das Verfahren die folgenden Schritte umfasst:
Bereitstellen einer anaeroben Kleberzusammensetzung, umfassend:
Komponente (a), die Monomere aus der Acrylfamilie umfasst und in Reservoir (i) aufbewahrt wird; und
Komponente (b), die eine Verbindung umfasst, welche freie Radikale erzeugen kann, wobei die Verbindung, die freie Radikale erzeugen kann, ein Peroxid ist und in Reservoir (ii), das sauerstoffundurchlässig ist, aufbewahrt wird;
wobei Komponente (a) keine Verbindung umfasst, die freie Radikale erzeugen kann, und Komponente (b) keine Monomere umfasst;
Mischen von Komponente (a) mit Komponente (b) in einer anaeroben Atmosphäre oder in Gegenwart eines Aktivators unter Bildung eines Klebers; und
In-Kontakt-Bringen des Klebers mit dem Wertgegenstand.

2. Verfahren gemäß Anspruch 1, wobei Komponente (a) MethacrylatMonomere umfasst, wobei Komponente (a) am meisten bevorzugt Hydroxypropylmethacrylat, 4-t-Butylcyclohexylmethacrylat und/oder 1,3-Butylenglycoldimethacrylat umfasst.

3. Verfahren gemäß Anspruch 1 oder 2, wobei Komponente (b) ein Hydroperoxid umfasst, wobei Komponente (b) besonders bevorzugt Cumenhydroperoxid umfasst, wobei Komponente (b) am meisten bevorzugt Cumenhydroperoxid und Cumen umfasst.

4. Verfahren gemäß einem der vorstehenden Ansprüche, das zusätzlich einen Aktivator umfasst.

5. Verfahren gemäß Anspruch 4, wobei der Aktivator ein Gemisch von sekundären Monomeren und eine Quelle aktiver Metallionen umfasst, wobei der Aktivator vorzugsweise Kupferionen umfasst.

6. Verfahren gemäß Anspruch 4 oder 5, wobei der Aktivator mit Komponente (a) kombiniert oder in einem getrennten Reservoir bereitgestellt wird.

7. Verfahren gemäß einem der vorstehenden Ansprüche, das zusätzlich ein unauslöschbares Pigment umfasst, wobei das unauslöschbare Pigment vorzugsweise ein Phthalocyanin ist, am meisten bevorzugt Kupferphthalocyanin.

8. Verfahren gemäß einem der vorstehenden Ansprüche, das zusätzlich ein Bleichmittel, wie Wasserstoffperoxid, umfasst.

9. Verfahren gemäß einem der vorstehenden Ansprüche, das zusätzlich eine Verbindung umfasst, die ein metallisches Merkmal eines wertvollen Dokuments zerstören kann, wobei es sich bei der Verbindung vorzugsweise um Aceton handelt.

10. Verfahren gemäß einem der vorstehenden Ansprüche, das zusätzlich eine Verbindung umfasst, die Druckfarbe in oder auf einem wertvollen Dokument auflösen oder löschen kann.

11. Verfahren gemäß einem der vorstehenden Ansprüche, das zusätzlich einen Marker umfasst, der verwendet werden kann, um gestohlene Wertgegenstände aufzuspüren.

12. Verfahren gemäß einem der Ansprüche 8 bis 11, wobei das unauslöschbare Pigment, das Bleichmittel, die Verbindung, die ein metallisches Merkmal eines wertvollen Dokuments zerstören kann, und/oder die Verbindung, die Druckfarbe in oder auf einem wertvollen Dokument auflösen oder löschen kann, mit Komponente (a) kombiniert oder mit Komponente (b) kombiniert oder in einem getrennten Reservoir bereitgestellt wird.

13. Verwendung einer Zusammensetzung zur Veränderung des Erscheinungsbilds eines Wertgegenstands im Falle einer Sicherheitsverletzung, vorzugsweise zum Unbrauchbarmachen, Einfärben oder Zerstören des Wertgegenstands, wobei die Zusammensetzung eine anaerobe Kleberzusammensetzung ist, umfassend:
Komponente (a), die Monomere aus der Acrylfamilie umfasst und in Reservoir (i) aufbewahrt wird; und
Komponente (b), die eine Verbindung umfasst, welche freie Radikale erzeugen kann, wobei die Verbindung, die freie Radikale erzeugen kann, ein Peroxid ist und in Reservoir (ii), das sauerstoffundurchlässig ist, aufbewahrt wird;
wobei Komponente (a) keine Verbindung umfasst, die freie Radikale erzeugen kann, und Komponente (b) keine Monomere umfasst; und
wobei die Komponenten (a) und (b) bei Kontakt in einer anaeroben Atmosphäre oder in Gegenwart eines Aktivators unter Bildung eines Klebers miteinander reagieren.

14. Verfahren gemäß einem der Ansprüche 1 bis 12, wobei der Wertgegenstand ein Dokument ist, wobei der Wertgegenstand vorzugsweise eine Banknote ist.

15. Verwendung gemäß Anspruch 13, wobei der Wertgegenstand ein Dokument ist, wobei der Wertgegenstand vorzugsweise eine Banknote ist.

## Revendications

1. Procédé permettant d'altérer, de tacher ou de dégrader un objet de valeur dans le cas d'une atteinte à la sécurité, ledit procédé comprenant les étapes consistant à :
fournir une composition adhésive anaérobie comprenant :
un composant (a) qui comprend des monomères de la famille des acryliques, et qui est stocké dans un réservoir (i) ; et
un composant (b) qui comprend un composé qui est capable de générer des radicaux libres dans lequel le composé qui est capable de générer des radicaux libres est un peroxyde, et qui est stocké dans un réservoir (ii) qui est imperméable à l'oxygène ;
dans lequel le composant (a) ne comprend pas de composé qui est capable de générer des radicaux libres et le composant (b) ne comprend pas de monomères ;
mélanger le composant (a) avec le composant (b) dans une atmosphère anaérobie ou bien en présence d'un activateur, pour former un adhésif : et
mettre en contact l'adhésif avec l'objet de valeur.

2. Procédé selon la revendication 1, dans lequel le composant (a) comprend des méthacrylates monomères, préférentiellement dans lequel le composant (a) comprend de l'hydroxypropyl méthacrylate, du 4-t-butylcyclohexyl méthacrylate, et/ou du 1,3-butylèneglycol diméthacrylate.

3. Procédé selon la revendication 1 ou 2, dans lequel le composant (b) comprend un hydroperoxyde, préférentiellement dans lequel le composant (b) comprend de l'hydroperoxyde de cumène, et plus préférentiellement dans lequel le composant (b) comprend de l'hydroperoxyde de cumène et du cumène.

4. Procédé selon l'une quelconque des revendications précédentes, qui comprend en outre un activateur.

5. Procédé selon la revendication 4, dans lequel l'activateur comprend un mélange de monomères secondaires et une source d'ions de métal actif, de préférence dans lequel l'activateur comprend des ions de cuivre.

6. Procédé selon la revendication 4 ou 5, dans lequel l'activateur est combiné avec le composant (a) ou est fourni dans un réservoir séparé.

7. Procédé selon l'une quelconque des revendications précédentes, qui comprend en outre un pigment indélébile, de préférence dans lequel le pigment indélébile est une phtalocyanine, plus préférentiellement de la phtalocyanine de cuivre.

8. Procédé selon l'une quelconque des revendications précédentes, qui comprend en outre un agent de blanchiment tel que du peroxyde d'hydrogène.

9. Procédé selon l'une quelconque des revendications précédentes, qui comprend en outre un composé qui peut dégrader une caractéristique métallique d'un document de valeur, de préférence dans lequel le composé est de l'acétone.

10. Procédé selon l'une quelconque des revendications précédentes, qui comprend en outre un composé qui peut dissoudre ou effacer l'encre dans ou sur un document de valeur.

11. Procédé selon l'une quelconque des revendications précédentes, qui comprend en outre un marqueur qui peut être utilisé pour tracer des objets de valeurs volés.

12. Procédé selon l'une quelconque des revendications 8 à 11, dans lequel le pigment indélébile, l'agent de blanchiment, le composé qui peut dégrader une caractéristique métallique d'un document de valeur, et/ou le composé qui peut dissoudre ou effacer l'encre dans ou sur un document de valeur est combiné avec le composant (a), ou est combiné avec le composant (b) ou est fourni dans un réservoir séparé.

13. Utilisation d'une composition, dans le but de changer l'aspect d'un objet de valeur dans le cas d'une atteinte à la sécurité, de préférence dans le but d'altérer, de tacher ou de dégrader l'objet de valeur, dans laquelle la composition est une composition adhésive anaérobie comprenant :
un composant (a) qui comprend des monomères de la famille des acryliques, et qui est stocké dans un réservoir (i) ; et
un composant (b) qui comprend un composé qui est capable de générer des radicaux libres, dans lequel le composé qui est capable de générer des radicaux libres est un peroxyde, et est stocké dans un réservoir (ii) qui est imperméable à l'oxygène ;
dans lequel le composant (a) ne comprend pas de composé capable de générer des radicaux libres et le composant (b) ne comprend pas de monomères ; et
dans lequel, au moment de la mise en contact dans une atmosphère anaérobie, ou bien en présence d'un activateur, les composants (a) et (b) réagissent pour former un adhésif.

14. Procédé selon l'une quelconque des revendications 1 à 12, dans lequel l'objet de valeur est un document, de préférence dans lequel l'objet de valeur est un billet de banque.

15. Utilisation selon la revendication 13, dans laquelle l'objet de valeur est un document, de préférence dans laquelle l'objet de valeur est un billet de banque.
